# EUROPEAN PATENT APPLICATION

(11) **EP 2 882 163 A1**
(43) Date of publication of application: **10.06.2015**
(21) Application number: 13360037.9
(22) Date of filing: 09.12.2013
(51) Int. Cl.: H04L 29/08

(54) **Method and system for scheduling a push data transmission**

(71) Applicant: ALCATEL LUCENT, 92100 Boulogne-Billancourt (FR)
(72) Inventor: Forlivesi, Claudio, 2018 Antwerp (BE); Kawsar, Fahim, 2018 Antwerp (BE); Acer, Utku, 2018 Antwerp (BE); Mashhadi, Afra, Dublin (IE)
(74) Representative: Greenwood, Matthew David

(57) **Abstract**

A method, in a wireless telecommunications network, for scheduling a push data transmission from the network to a user equipment (UE) device, including providing a push notification including a predefined parameter representing a delay period for the notification, determining a projected time for establishment of an active communications channel of a network interface of the UE, on the basis of the determination, linking transmission of the notification with transmission of data using the established active communications channel or transmitting the notification instantaneously.

## Description

### TECHNICAL FIELD

The present invention relates generally to the field of wireless telecommunications networks, and more specifically, although not exclusively, to managing power consumption of user equipment devices.

### BACKGROUND

Mobile computing devices such as smartphones and tablets and so on can run or execute different types of network applications. The cellular radio interface used for communication in such network applications can cause significant energy drains because typically the device in question does not immediately go into a low power idle-state after completing a data session. Instead, the cellular radio remains in a high energy state for a certain duration after communication has ended, which is called the "Tail State". This state prevents the device from continuously acquiring and releasing RF resources, which is an expensive procedure requiring multiple message exchanges between the device and the network.

Mobile applications with push notification features exacerbate the energy drain problem caused by tail states. Typically with such notifications, the majority of the data sessions over the network are short (some notifications are not viewed and even if a user sees a notification, it may not trigger a data session), which can cause a device's radio to be at tail states needlessly. In addition, even when a user is using offline applications, advertisements (ads) that are periodically pushed to these applications by engine providers can consume device energy. Although sporadic in nature and small in size (5 KB or less), the exchange of these ads puts the device's radio into the tail state frequently. As such, this large proportion of small packets caused by the combination of ads and push notifications is one of the prime factors of energy drain in current mobile devices.

### SUMMARY

According to an example, there is provided a method, in a wireless telecommunications network, for scheduling a push data transmission from the network to a user equipment (UE) device, including providing a push notification including a predefined parameter representing a delay period for the notification, determining a projected time for establishment of an active communications channel of a network interface of the UE, on the basis of the determination, linking transmission of the notification with transmission of data using the established active communications channel or transmitting the notification instantaneously. Determining a projected time for establishment of an active communications channel can include probabilistically inferring the likelihood of a data session of the UE within a predefined time period. Data relating to the push notification can be provided. The push notification and the data relating thereto can be transmitted to the UE. The push notification can comprise data representing content for an application to be executed on the UE. In the event that the projected time for establishment is zero, the method can further include providing data content related to the push notification, transmitting the related data content and the push notification using the established communications channel. Determining a projected time can include performing deep packet inspection on data traffic for or of the UE.

According to an example, there is provided a system, comprising a network hub including a deep packet inspector to perform deep packet inspection of data traffic from a third party content provider for a UE, a prediction engine to determine, using data from the deep packet inspector, a projected time for establishment of an active communications channel of the UE, and a linking engine to link transmission of a notification for the UE with transmission of data for the UE using the established active communications channel. A server to provide content related to the push notification on request from a content prefetching engine via the network hub can be provided. A notification server to provide date representing a push notification including a predefined parameter representing a delay period for the notification can be provided. The prediction engine can include an activity start time prediction engine to generate a predicted start time for UE activity using data from the deep packet inspector, an activity duration prediction engine to determine a predicted duration for the activity, and an activity type prediction engine to determine the type of activity for which the predicted start time and duration are generated and determined, respectively. In the event that the projected time for establishment is zero, the system can provide data content related to the notification and transmit the related data content and the notification using the established communications channel.

According to an example, there is provided a prediction engine for use in a wireless telecommunications system operable to determine a projected time for establishment of an active communications channel of a network interface of a UE device using data from deep packet inspection of data traffic from a third party content provider for the device.

According to an example, there is provided a scheduling engine for use in a wireless telecommunications system operable to schedule a push data transmission from the system to a UE device on the basis a predefined parameter representing a delay period for the notification and a projected time for establishment of an active communications channel of a network interface of the UE.

According to an example, there is provided a computer program product, comprising a computer usable medium having computer readable program code embodied therein, said computer readable program code adapted to be executed to implement a method, in a wireless telecommunications network, for scheduling a push data transmission from the network to a UE device as provided above.

### BRIEF DESCRIPTION OF THE DRAWINGS

Embodiments will now be described, by way of example only, with reference to the accompanying drawings, in which:
Figure 1 is a schematic representation of a system according to an example;
Figure 2a is a schematic representation of a store and forward process;
2b is a schematic representation of a data scheduling process according to an example; and
Figure 2c is a schematic representation of a further data scheduling process according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

References herein to a notification or a push notification include reference to push advertisements and more generally to typically relatively small sporadic downlink data messages in a telecommunication network or system. For example, a push notification can be or include a push advertisement, which can include a notification and related content for example. A notification or a push notification therefore includes messages of small size that are pushed by a notification server to a user device. Advertisement or push advertisement or ads includes small messages that are pushed from an ad server to a user device.

According to an example, a method for transmitting small sporadic messages such as push notifications and push advertisements to UE devices in an energy-efficient manner is provided. More specifically, the number of tail states for a device can be reduced by scheduling push notifications and ad messages so that they can leverage an active RF connection. Notifications and ads can be delayed using temporal constrains such that they are linked or piggybacked with transmission of data using an active communications channel when an active data session is started. To determine the delay, a network activity predictor can be used to probabilistically infer the possibility of a data session of a device within a predefined time period. The method executes on the network side of a wireless telecommunications system, and is therefore independent of individual devices. As such there is no need for any modification to devices or mobile operating systems.

In an example, a method and apparatus for scheduling and delaying push notifications from the network side of a wireless telecommunications network is provided. Push notifications that need to be sent instantaneously can be transmitted with some related data or content such as ads in order to take advantage of the transmission channel to be established (or already established) for transmission of the notification, thereby optimising energy consumption on the device.

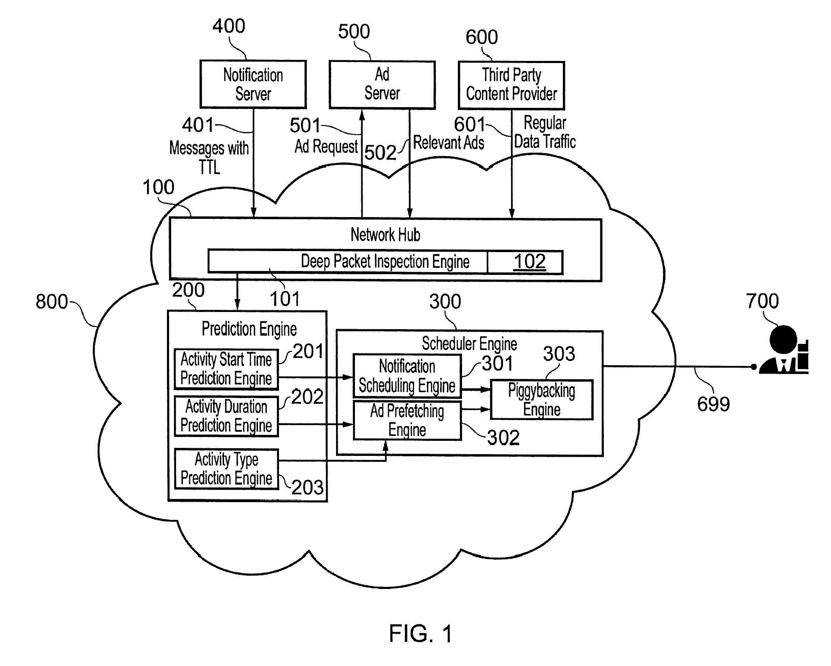

Figure 1 is a schematic representation of a system according to an example. A push notification is sent by a content provider to a notification server 400 which is then relayed to a user device 700 through a network hub 100. A 'Time To Live' (TTL) field can be added to notification messages as described further below, which indicates the time until the transmission of the push notification can be delayed and is defined by the producer of the notification. Upon receiving a notification message, the network 800 consults a Scheduler Engine 300 before establishing a transmission channel 699 to device 700. The Scheduler Engine 300 in turn queries a Activity Prediction Engine 200 to determine whether to delay the notification or to push it instantaneously. If a notification is delayed, it is delivered when an RF channel is established for a data transmission such that the notification is linked or piggybacked to the data transmission and thus sent using the established channel thereby minimizing the occurrence of tail state, and optimizing energy consumption.

If the next activity is not going to happen before the expiry of the TTL or the TTL is set by the content provider to 0, in an example the push notification can be sent instantaneously. However, in order to utilize an already established transmission channel or a channel that is established to transmit the data that must be sent instantaneously, related content which can be fetched from a server 500, such as an ad server, can be transmitted with the notification. In this case, upon receiving a push notification with zero TTL, the Scheduler Engine 300 sends a request to the Activity Prediction Engine 200 to determine the duration of the activity type corresponding to the notification message to be sent. The Scheduler Engine 300 then sends a request to the server 500 via network hub 100 for relevant content for the activity type assuming that the application that corresponds to the push notification will start after the content becomes available or is permitted to go live. For example, if a notification is for a social networking activity, server 500 can provide social networking advertising content. The notification along with the provided additional content can then be pushed (transmitted) to the device 700 using the communication channel established for the notification (or an existing communication channel).

Therefore a method and system according to an example provides for the scheduling of transmission of push notifications and push advertisements to mobile devices by leveraging a network activity predictor. The transfer of these messages in a wireless telecommunications system is scheduled from the network to the mobile device (i.e. downlink traffic) based on the time that the message arrives, its deadline (or TTL) as defined by the producer of the notification and whether any traffic is predicted before the deadline.

Referring again to figure 1, a Network Activity Prediction Engine 200 and a Scheduler Engine 300 can be attached to a strategic network hubs 100 throughout the wireless telecommunications network 800. In an example, a strategic network hub 100 can be a backbone router operated by a network engine provider. The Network Hub 100 includes a Deep Packet inspector 102 to perform a deep packet Inspection (DPI) function 101, which allows data 601 representing messages passing through the Network Hub 100 coming from third party content providers 600 to be analysed. For example, information regarding the type of the activity, its current time and duration can be used to learn the behavioural pattern of the user. This data can then be used in the Prediction Engine 200 to predict the likelihood of a user being active at a given time.

This component comprises three functionalities to provide estimations for i) when a user will next be engaged in some network activity 201, ii) for how long 202, and iii) with what activities 203, such as Online Social Network, Online Video, Online Games, and os on. The Scheduler Engine 300 leverages this Prediction Engine 200 to offer three functionalities, i) scheduling a notification 301, ii) prefetching content, such as ad content, based on future user activity 302, and iii) linking or piggybacking notification and content with other transmissions 303, such as bulky transmissions from the network to the device 700.

As noted, the time to live (TTL) field added to notification messages 401 that originate from a Notification Server 400 is the time until the transmission of the push notification can be delayed and is defined by the producer of the notification. Upon arrival of a push notification message 401, which is detected by the DPI function 101 of the Network Hub 100, the Schedule Engine 300 queries the Prediction Engine 200 and receives an estimated time, tₑ (along with confidence level of the estimate) of the next activity that the user will be launching on their device 700 through 201. If the notification message 401 has a TTL which is longer than that of the predicted time of next activity the notification is delayed until the tₑ and until the actual data transmission starts for the other activity. The scheduler 301 links or piggybacks the delayed notification with the current transmission using a linking/piggybacking function 303. Although the term piggyback implies that a notification trails data, a notification can be transmitted before other data/content according to an example.

In an example, if no network activity is predicted before the TTL expires, the delivery of the push notification can occur straight away. However, to leverage the tail state of the device 700, the Scheduler Engine 300 queries the Prediction Engine 200 for an estimated activity duration of the activity for which the notification is sent/related. Prediction Engine 200 returns this through an activity duration prediction engine 202, and an activity type prediction engine 203. Scheduler engine 300 uses an Ad Prefetching engine 302 to communicate with the Ad Server 500 to request and prefetch content 501 that can then be piggybacked with the notification assuming that the application that corresponds to the push notification will start after the content becomes available.

The ad prefetching engine 302 leverages the activity type prediction engine 203 to receive relevant content such as ads 502 to ensure a higher impression rate. In addition, it can query the activity duration prediction engine 202 to determine the number of ad slots, for example, that would be available so as to request 501 the right number of ads or amount of content from the server 500.

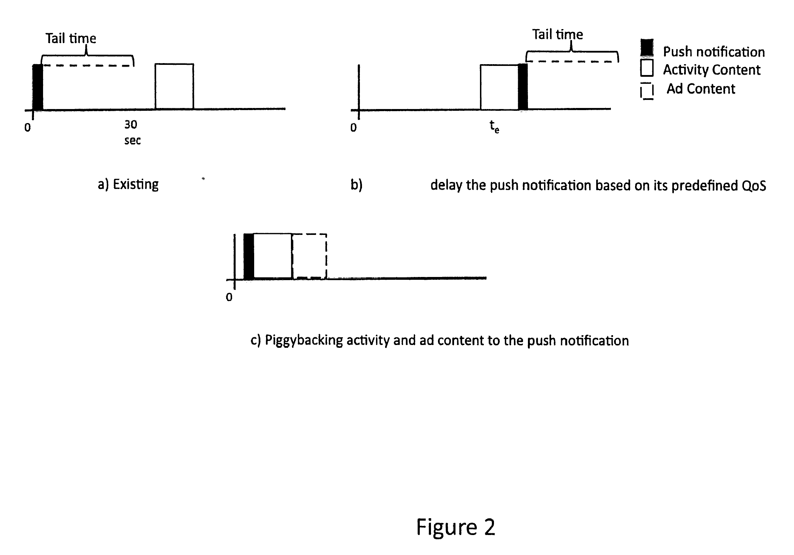

Figure 2 is a schematic representation of multiple data scheduling processes.

In figure 2a, an existing solution is depicted in which a push notification is always sent immediately resulting in establishment of a transmission channel which is then left empty until the tail time (duration of tail state) has died off. This illustrates that an activity from a UE device was to be initiated in near future.

Figure 2b shows a push notification whose transmission is delayed so that it is to be delivered along with predicted future activity that is set or predicted to occur after time *tₑ*. In this example the push notification has a TTL that enables transmission of the notification to be delayed without compromising a quality of service. In the example of figure 2b, the next predicted activity starts before the TTL expires, thus complying with the Quality-of-service of push notifications (i.e., not delaying longer that the TTL).

Figure 2c, depicts the case where no online activity is predicted within the deadline (TTL) of the push notification. In this case, the notification is delayed for some time during which the content for the application that corresponds to the push notification and the online ads are prefetched. The transmission of the push notification is followed by the application content and the online ad for example.

The present methods and systems improve RF resource utilization and extend device battery life. In addition, context can be provided to an ad server, thereby altering the way current mobile advertisement works. The method and system is network driven and does not require any device, application or OS modification.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a wireless telecommunications network, for scheduling a push data transmission from the network to a user equipment (UE) device, including:
providing a push notification including a predefined parameter representing a delay period for the notification;
determining a projected time for establishment of an active communications channel of a network interface of the UE; and
on the basis of the determination, linking transmission of the notification with transmission of data using the established active communications channel or transmitting the notification instantaneously.

2. A method as claimed in claim 1, wherein determining a projected time for establishment of an active communications channel includes probabilistically inferring the likelihood of a data session of the UE within a predefined time period.

3. A method as claimed in claim 1 or 2, further including providing data relating to the push notification.

4. A method as claimed in claim 3, wherein the push notification and the data relating thereto is transmitted to the UE.

5. A method as claimed in any preceding claim, wherein the push notification comprises data representing content for an application to be executed on the UE.

6. A method as claimed in any preceding claim, wherein in the case that the projected time for establishment is zero, the method further includes;
providing data content related to the push notification;
transmitting the related data content and the push notification using the established communications channel.

7. A method as claimed in claim 2, wherein determining a projected time includes performing deep packet inspection on data traffic for or of the UE.

8. A system, comprising:
a network hub including a deep packet inspector to perform deep packet inspection of data traffic from a third party content provider for a UE;
a prediction engine to determine, using data from the deep packet inspector, a projected time for establishment of an active communications channel of the UE; and
a linking engine to link transmission of a notification for the UE with transmission of data for the UE using the established active communications channel.

9. A system as claimed in claim 8, further including a server to provide content related to the push notification on request from a content prefetching engine via the network hub.

10. A system as claimed in claim 8 or 9, further including a notification server to provide date representing a push notification including a predefined parameter representing a delay period for the notification.

11. A system as claimed in any of claims 8 to 10, wherein the prediction engine includes:
an activity start time prediction engine to generate a predicted start time for UE activity using data from the deep packet inspector;
an activity duration prediction engine to determine a predicted duration for the activity; and
an activity type prediction engine to determine the type of activity for which the predicted start time and duration are generated and determined, respectively.

12. A system as claimed in any of claims 8 to 11, wherein, in the event that the projected time for establishment is zero, the system is operable to provide data content related to the notification and transmit the related data content and the notification using the established communications channel.

13. A prediction engine for use in a wireless telecommunications system operable to determine a projected time for establishment of an active communications channel of a network interface of a UE device using data from deep packet inspection of data traffic from a third party content provider for the device.

14. A scheduling engine for use in a wireless telecommunications system operable to schedule a push data transmission from the system to a UE device on the basis a predefined parameter representing a delay period for the notification and a projected time for establishment of an active communications channel of a network interface of the UE.

15. A computer program product, comprising a computer usable medium having computer readable program code embodied therein, said computer readable program code adapted to be executed to implement a method, in a wireless telecommunications network, for scheduling a push data transmission from the network to a UE device as claimed in any of claims 1 to 7.
